# EUROPEAN PATENT APPLICATION

(11) **EP 2 647 446 A1**
(43) Date of publication of application: **09.10.2013**
(21) Application number: 13157851.0
(22) Date of filing: 05.03.2013
(51) Int. Cl.: B21D 28/00, B30B 1/18, F16H 25/22

(54) **Operating device for tools/punches in punch heads.**

(30) Priority: 04.04.2012 IT VE20120011 U
(71) Applicant: DALLAN S.P.A., 31033 Castelfranco Veneto (IT)
(72) Inventor: Dallan, Sergio, 31033 CASTELFRANCO VENETO (IT)
(74) Representative: Piovesana, Paolo

(57) **Abstract**

An operating device for tools/punches in punch heads, characterised by comprising:
- an electric motor (2),
- a speed reducer applied to the shaft of the electric motor (2),
- a recirculating ball system (8) consisting of a lead nut (10) and a lead screw (12), the lead nut being rotoidally secured to the speed reducer,
- means (18, 20) for blocking lead screw rotation,
- a striker (28) applied to the lead screw head.

## Description

The present invention relates to an operating device for tools/punches in punch heads.

Punching machines are known, inserted into metal strip processing lines. They generally comprise punch heads, the tools and punches of which are controlled, in accordance with predetermined operative cycles, by hydraulic cylinders applied to the head itself, and act on a metal strip to be processed, advancing between the punches and the respective dies.

These known hydraulic cylinders present however the drawback of requiring equipment for bringing the hydraulic fluid to the chambers and also involve possible fluid leakages between said connectors.

The object of the invention is to eliminate these drawbacks by providing a device which enables the punch to be easily and comfortably operated.

This object is attained according to the invention by an operating device for tools/punches in punch heads as described in claim 1.

The present invention is further clarified hereinafter with reference to the accompanying drawings, in which:

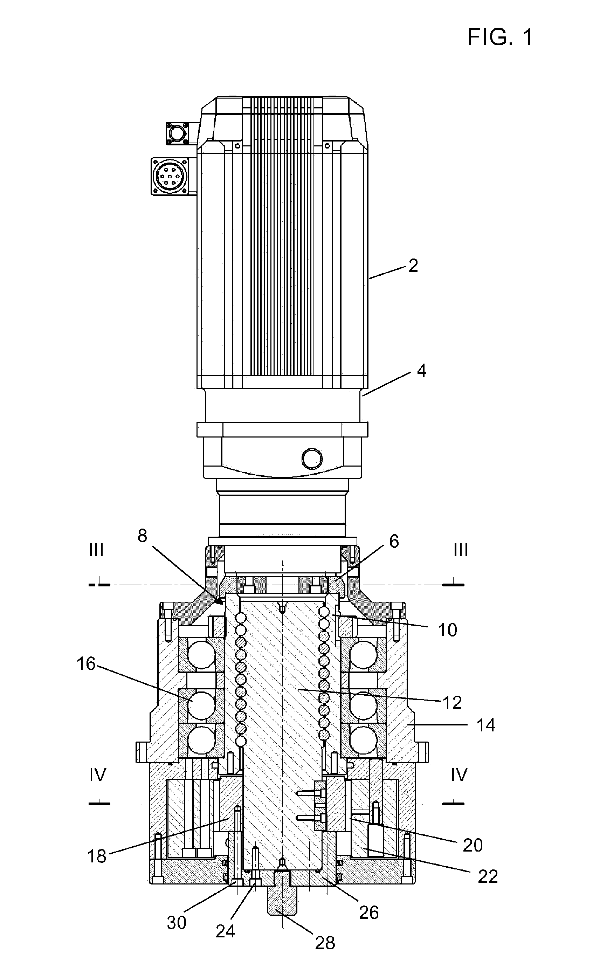

Figure 1 is a longitudinal section through the device according to the invention shown in the punch raised configuration,

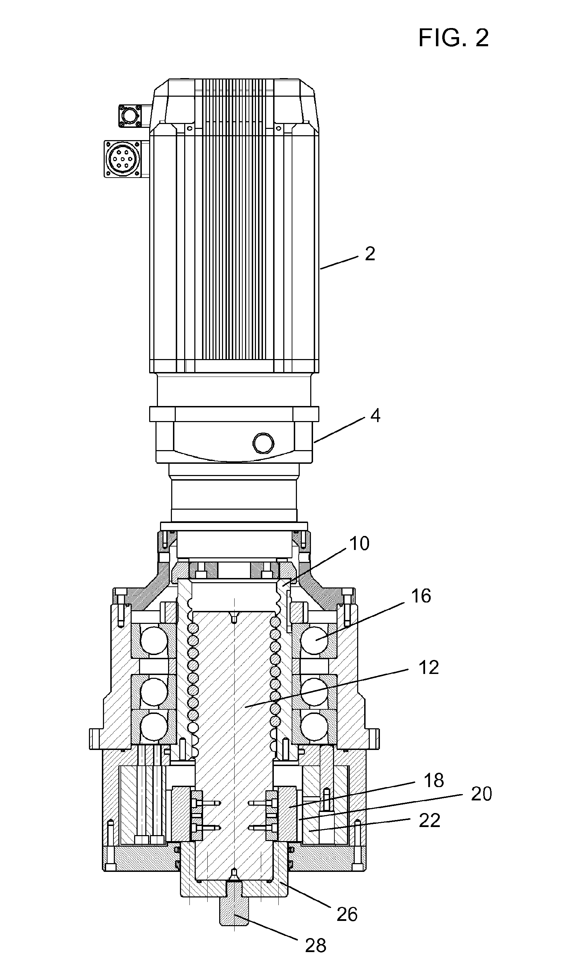

Figure 2 shows it in the same view as Figure 1 but in the punch lowered configuration,

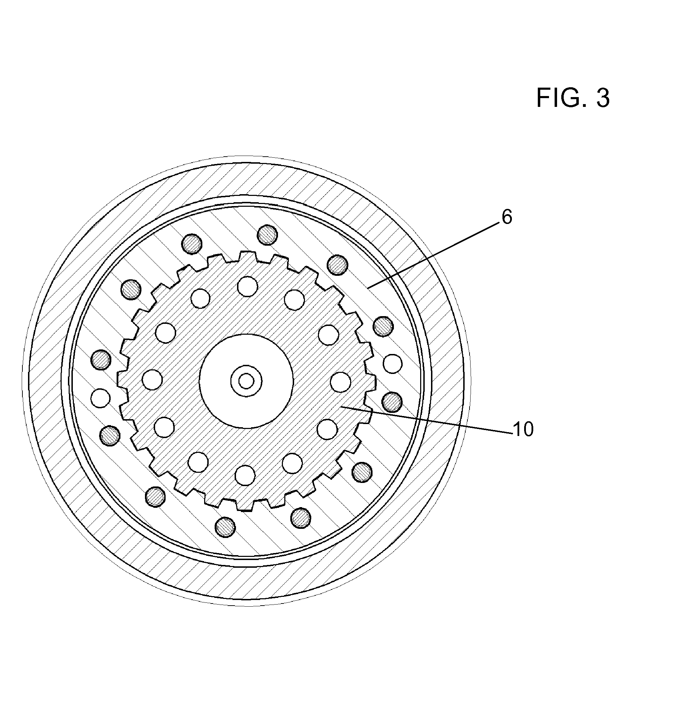

Figure 3 is a section therethrough on the line III-III of Figure 1, and

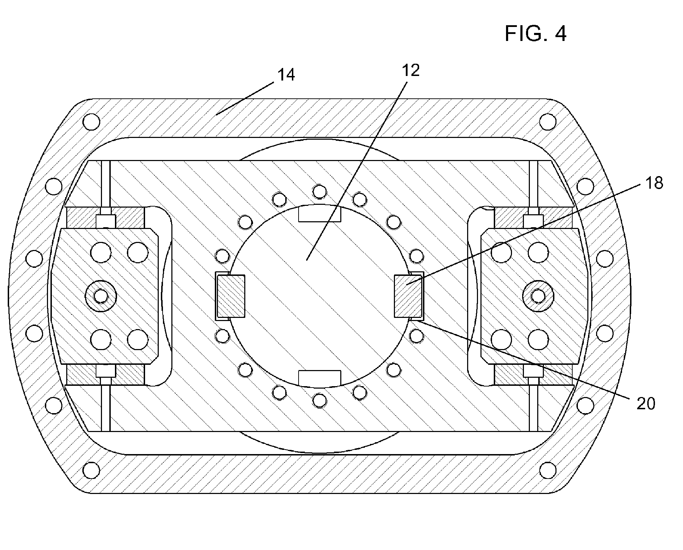

Figure 4 is a section therethrough on the line IV-IV of Figure 1.

As can be seen from the figures, the device according to the invention comprises substantially a brushless motor 2 to the shaft of which an epicyclic reducer 4 is fixed, connected via a splined joint 6 to a recirculating ball system 8 consisting of a lead nut 10 and a lead screw 12.

Oblique contact bearings 16 are provided between the lead nut 10 and the outer casing 14 housing the system 8.

The lateral surface of the lead screw 12 comprises two keys 18 slidable along two vertical seats 20 provided in a lead screw anti-rotation system 22.

A cap is applied to the head of the lead screw 12 by a screw 24 which engages the striker 28.

The cap is also fixed by screws 30 to the keys 18.

In the operation of the device according to the invention, the rotation of the splined joint 6, engaged with the lead nut 10, causes this to rotate, with consequent downward descent of the lead screw 12, retained by the anti-rotation system 22, with the striker 28 applied.

From the aforegoing it is apparent that the device according to the invention enables the punch to operate easily and comfortably without requiring hydraulic connections.

## Claims

1. An operating device for tools/punches in punch heads, **characterised by** comprising:
- an electric motor (2),
- a speed reducer applied to the shaft of the electric motor (2),
- a recirculating ball system (8) consisting of a lead nut (10) and a lead screw (12), the lead nut being rotoidally secured to the speed reducer,
- means (18, 20) for blocking lead screw rotation,
- a striker (28) applied to the lead screw head.

2. A device as claimed in claim 1, **characterised in that** the electric motor is of brushless type.

3. A device as claimed in claim 1, **characterised in that** the reducer is of epicyclic type.

4. A device as claimed in claim 1, **characterised in that** the means for blocking lead screw rotation consist of two keys (18) applied to the lead screw and slidable along two vertical seats (20) provided in the lead screw anti-rotation system (22).

5. A device as claimed in claim 1, **characterised in that** a cap (26) is applied to the head of the lead screw (12) and engages the striker (28).
